# EUROPÄISCHE PATENTSCHRIFT

(11) **EP 1 480 508 B1**
(45) Veröffentlichungstag und Bekanntmachung des Hinweises auf die Patenterteilung: **18.04.2007**
(21) Anmeldenummer: 03729254.7
(22) Anmeldetag: 14.01.2003
(51) Int. Cl.: A01C 3/02, B09B 1/00

(54) **ABDECKMATERIAL FÜR FLÜSSIGE SUBSTANZEN UND HAUFWERKE UND VERFAHREN ZU SEINER HERSTELLUNG**
COVERING MATERIAL FOR LIQUID SUBSTANCES AND BEDS AND A METHOD FOR PRODUCING THE SAME
MATERIAU DE COUVERTURE POUR SUBSTANCES LIQUIDES ET DES DEBRIS ET PROCEDE POUR LE PRODUIRE

(30) Priorität: 14.01.2002 DE 10202936
(43) Veröffentlichungstag der Anmeldung: 01.12.2004
(73) Patentinhaber: Leibniz-Institut für Agrartechnik Potsdam-Bornim e.V. (ATB), 14469 Potsdam (DE)
(72) Erfinder: BERG, Werner, 14469 Potsdam (DE)
(74) Vertreter: Gulde, Klaus W.
(86) Internationale Anmeldenummer: PCT/EP2003/000301
(87) Internationale Veröffentlichungsnummer: WO 2003/056900

(56) Entgegenhaltungen:
- EP-A- 0 183 218
- DE-A- 3 624 988
- DE-A- 3 913 169
- DE-A- 10 148 524
- US-A- 4 990 373
- US-A- 5 743 213

## Beschreibung

Die Erfindung betrifft ein Abdeckmaterial für flüssige Substanzen und Haufwerke und ein Verfahren zu seiner Herstellung gemäß den Oberbegriffen der Ansprüche 1 und 10.

Die Erfindung betrifft insbesondere Materialien zum Abdecken von flüssigen Substanzen oder Haufwerken zur Verminderung von gasförmigen Emissionen. Mit den Materialien können Güllebecken, Güllekanäle, Klärbecken und andere offene Behälter der Landwirtschaft und der Pharma- und Lebensmittelindustrie abgedeckt werden. Es lassen sich mit den Materialien auch Haufwerke abdecken, wie sie zum Beispiel bei der Lagerung von Exkrementen in der Tierhaltung vorkommen.

Ein Abdeckmaterial mit den Merkmalen der Oberbegriffe der Ansprüche 1 und 10 wird z.B. in der DE-A-3913169 beschrieben.

Die Emissionen von Geruch, Ammoniak (NH₃), Methan (CH₄) und Distickstoffmonoxid (N₂O) aus flüssigen Substanzen wie Gülle, Abwasser u.ä. sowie aus Haufwerken wie Dunglagern u.ä. sind unerwünscht und können zumindest teilweise mit verschiedenen Maßnahmen vermindert werden. Diese Maßnahmen lassen sich unterteilen in:
- Kapseln der Emittenten
- Anwendung von Zusatzstoffen und
- Aufbereitungsverfahren.

Die einfachste Form der Kapselung ist das Abdecken der Emittenten mit dazu geeigneten Materialien wie z.B. Stroh, Granulaten, Bentoniten, Blähton, oder anderen Schüttungen, Torf oder Folien.

Derartige Materialien werden z.B. in DE 19714869 und DD 300453 beschrieben, dabei handelt es sich um Mischungen aus Perlit, Flugasche, Calciumoxid, Zement, hydrophobierter Kieselsäure sowie polymeren organischen Bindemitteln und weiteren Bestandteilen.

Aus DE 29622384 ist eine schwimmende Abdeckschicht aus Kunststoff bekannt.

Eine Behälterabdeckung mit einer Folie oder Plane ist in DE 19504740 dargestellt.

Die Verwendung von Zusatzstoffen bewirkt eine Verminderung der Emissionen durch die Änderung der Eigenschaften der Emittenten. Sehr wirksam ist die Absenkung des pH-Wertes durch den Zusatz von Säure. Die Verwendung organischer Säuren, wie beispielsweise in DE 4139682 A1 beschrieben, ist besonders umweltverträglich. In Emittenten, die säurebildende Mikroorganismen enthalten lässt sich die Säurebildung und damit die pH-Wert-Verringerung forcieren, indem man, wie in DE 19714588 beschrieben, Glukose, Saccharose oder leicht abbaubare organische Substanz zusetzt.

Aufbereitungsverfahren wie Fest-Flüssig-Trennung, Strippung oder deren Kombination können die Emissionen ebenfalls sehr vermindern, sind aber auch mit sehr hohen Kosten verbunden.

Die bisher bekannten Maßnahmen zur Minderung der genannten Emissionen weisen einen, mehrere öder alle der folgenden Nachteile auf:
- sie haben eine geringe Wirkung
- sie sind nur auf einzelne Emissionen gerichtet
- sie erhöhen andere Emissionen
- sie verursachen hohe Kosten.

Deshalb besteht die Aufgabe der Erfindung darin, Abdeckmaterialien, die die Emissionen wirksam vermindern, sich nicht nachteilig auf andere Emissionen auswirken und keine hohen Aufwendungen verursachen, anzubieten.

Die Lösung der Aufgabe erfolgt mit den Merkmalen der Ansprüche 1 und 10.

vorteilhafte Weiterbildungen sind in den Unteransprüchen angegeben.

So besteht das erfindungsgemäße Abdeckmaterial für flüssige Substanzen und Haufwerke aus einem inerten Trägermaterial, das mit aktiven Zusätzen kombiniert ist.

In einer vorteilhaften Ausgestaltung der Erfindung besteht das inerte Trägermaterial aus festen Materialien wie Stroh, Granulaten, Bentoniten, Blähton und weiteren möglichst porösen mineralischen Materialien mit einer Dichte unter 1 g/cm³, Torf und Folien. Erfindungsgemäß werden als aktive Zusätze pH-Wert senkende Stoffe oder Stoffgemische in das inerte Trägermaterial eingebracht.

In einer vorteilhaften Ausgestaltung der Erfindung sind die aktiven Zusätze insbesondere Säuren und Salze, die in wässriger Lösung saure Reaktion zeigen. Als Säuren werden insbesondere anorganische und organische Säuren und deren Salze verwendet.

In einer weiteren vorteilhaften Ausgestaltung wird Milchsäure und deren Salze (Laktate) in das Trägermaterial eingebracht.

In einer weiteren vorteilhaften Weiterbildung der Erfindung werden dem inerten Trägermaterial durch Mikroorganismen oder Enzyme umsetzbare Stoffe zugesetzt, die beim Ablaufen der mikrobiologischen Umsätze Säure bilden. Erfindungsgemäß eignen sich dazu kohlenhydrathaltige Stoffe. Insbesondere zuckerhaltige und kohlenhydrathaltige organische Reststoffe lassen sich vorteilhaft und kostengünstig in die Trägermaterialien einbringen.

So werden in einer weiteren Ausgestaltung der Erfindung Glukose, Saccharose oder Melasse verwendet.

Die Herstellung des erfindungsgemäßen Abdeckmaterials erfolgt durch Vermischen des inerten Trägermaterials mit den aktiven Zusätzen.

In einer vorteilhaften Ausgestaltung des Herstellungsverfahrens werden auf der Oberfläche des inerten Trägermaterials die aktiven Zusätze fixiert.

In einer weiteren Ausgestaltung der Erfindung kann die Fixierung der Zusätze beispielsweise durch eine Hydrophobierungsbehandlung erreicht werden.

In einer Weiterbildung der Erfindung ist es von Vorteil, das inerte Trägermaterial vor der Vermischung und Fixierung mit aktiven Zusätzen zu erwärmen.

Eine weitere vorteilhafte Ausgestaltung der Erfindung sieht vor, dass als Hydrophobierungsmittel Stearate, Silicanemulsionen oder andere hydrophobierende Stoffe eingesetzt werden.

Eine weitere vorteilhafte Ausgestaltung der Erfindung sieht vor, das inerte Trägermaterial vor dem Einbringen der aktiven Zusätze einer Temperaturbehandlung zwischen 100 und 700°C zu unterziehen. Damit wird eine optimale Fixierung der aktiven Zusätze erreicht.

Die Erfindung bewirkt eine Herabsetzung des pH-Wertes des Emittenten im Kontaktbereich mit dem erfindungsgemäßen Abdeckmaterial. Dies geschieht dadurch, dass das Abdeckmaterial mit den aktiven Zusätzen allmählich die aktiven Zusätze an den Emittenten abgibt, so dass der pH-Wert des Emittenten vor allem an dessen Oberfläche - dem Ort der Emissionen - abnimmt. Diese Kombination von Abdeckung und pH-Wert-Absenkung des Emittenten ermöglicht eine effektive Emissionsminderung, insbesondere dadurch, dass die Absenkung des pH-Wertes vor allem an der Oberfläche des Emittenten geschieht, und nicht gleichermaßen in seinem gesamten Volumen.

Dies stellt einen ganz entscheidenden Unterschied zu den in DE 19714869, DE 29622384, DE 19504740, DE 4139682 und DE 19714588 beschriebenen Lösungen dar.

Die Zugabe von Säuren (und säureproduzierenden Mikroorganismen sowie Stoffen, die deren Nahrungsgrundlage bilden) wie in DE 4139682 beschrieben, oder die Zugabe von Glukose, Saccharose oder leicht abbaubarer organischer Substanz, wie in DE 19714588 dargestellt, bewirkt eine Herabsetzung des pH-Wertes des Emittenten vor allem am Boden des Lagerbehälters, während die pH-Wert-Abnahme an der Oberfläche des Emittenten geringer ist. Dies beruht darauf, dass die Dichte der zugegebenen Stoffe größer ist als die Dichte der Emittenten - die zugegebenen Stoffe also nach unten absinken, und darauf, dass die Mikroorganismen hauptsächlich in der unteren Sinkschicht der Emittenten, am Boden der Lagerbehälter Säure produzieren, da sie dort ihre Nahrungsgrundlage vorfinden.

Bei der Anwendung des erfindungsgemäßen Abdeckmaterials verhält es sich genau umgekehrt. Dadurch, dass das Abdeckmaterial als Träger für die pH-Wert absenkenden. Zusatzstoffe fungiert - diese Stoffe sich also an der Oberfläche der Emittenten befinden - wird der pH-Wert der Emittenten an deren Oberfläche stärker herabgesetzt als in deren unteren Schichten (vgl. Ausführungsbeispiele). Dadurch werden die mikrobiologischen Aktivitäten bzw. die Freisetzung von NH₃ im überwiegenden Volumen, insbesondere auch in Bodennähe kaum beeinflusst.

Auch hinsichtlich der Wirkungen weist die neue Lösung wesentliche Vorteile gegenüber den bekannten Lösungen auf. So werden mit den in DE 19714869 beschriebenen Materialien oder auch mit Blähton zwar gute Ergebnisse hinsichtlich der Emissionsminderung von Geruch, Ammoniak und auch Methan erreicht. Nachteiligerweise kommt es bei deren Anwendung jedoch zu sonst nicht auftretenden Emissionen von Distickstoffmonoxid (N₂O). Diese Emissionen werden sehr negativ beurteilt, da sie zur anthropogenen Erwärmung der Erdatmosphäre/zu Klimaveränderungen beitragen, und zwar mit dem 310-fachen spezifischen Treibhausgaspotential als Kohlendioxid (CO₂).
Für die erfindungsgemäßen Abdeckmaterialien können mit großem Vorteil alle bekannten Materialien und Mischungen verwendet werden, die sich schon bisher zur Minderung von Emissionen flüssiger Emittenten einsetzen lassen. Dies sind beispielsweise Stroh, Granulate, Bentonite, Blähton, weitere mineralische Materialien, Torf oder Folien. Bei der Verwendung von Stroh als Abdeckmaterial sollte dieses gehäckselt sein.

Den Abdeckmaterialien können organische oder anorganische Säuren, Säuregemische, Salze der Säuren, oder auch Stoffe, die unter Einwirkung von Mikroorganismen eine Säurebildung bewirken zugegeben werden. Geeignet sind beispielsweise 2-Hydroxypropansäure (Milchsäure) und deren Salze (Laktate).

Das Kombinieren des inerten Trägermaterials mit aktiven Zusatzstoffen erfolgt vorzugsweise vor der Zugabe zum Emittenten.
Dazu gibt man das Trägermaterial und die aktiven Zusatzstoffe gemeinsam in einen Behälter, so dass das Trägermaterial die Zusatzstoffe aufnehmen kann. Dem Trägermaterial können weitere Substanzen zugegeben werden, die die Abgabe der Zusatzstoffe an den Emittenten verzögern, das heißt, es wird eine Fixierung, mindestens Teilfixierung, der aktiven Zusatzstoffe erreicht. Beispielsweise nach einem Tag kann man dann das erfindungsgemäße Abdeckmaterial aus dem Behälter entnehmen. Bevor das Abdeckmaterial auf den Emittenten gegeben bzw. in diesen eingemischt wird, sollte es vorzugsweise einer zusätzlichen Behandlung unterzogen werden. Die Behandlung ist so vorzunehmen, dass eine allmähliche Abgabe der Zusatzstoffe an den Emittenten möglich ist (Teilfixierung) und zugleich die Aufnahme von Feuchtigkeit durch Hydrophobierung weitgehend vermieden wird. Für diese Behandlung können Stearate, Silicanemulsionen oder andere hydrophobierende Stoffe/Mittel benutzt werden. Hier wirkt sich eine Erwärmung des Materials in der Regel positiv auf die Wirkung der Hydrophobierung aus.

Zwischen dem Abdeckmaterial und dem Emittenten können sich auch Membranen befinden, die für Wasserstoff-Ionen(H⁺) durchlässig sind, nicht aber für die Säurerest-Ionen. Damit wird die Wirkung des Abdeckmaterials verstärkt.

Das Trägermaterial sollte vorzugsweise zuerst mit Zusatzstoffen versehen und danach wie beschrieben behandelt werden. Aber auch bereits hydrophobierte Granulate, Bentonite oder Blähton können als Abdeckmaterial verwendet werden. Bereits hydrophobiertes Material sollte zunächst auf eine Temperatur von 100 bis 200°C erwärmt werden. Anschließend gibt man das Trägermaterial und die Zusatzstoffe gemeinsam in einen Behälter, in dem beide vermischt werden. Dabei ist darauf zu achten, dass sich zu diesem Zeitpunkt die Temperatur unter der Siedetemperatur des Zusatzstoffes befindet. Der Zusatz weiterer Substanzen, die die Abgabe der Zusatzstoffe an den Emittenten verzögern, ist möglich. Nach einem Tag kann man das erfindungsgemäße Abdeckmaterial aus dem Behälter entnehmen. Bevor das Abdeckmaterial auf den Emittenten gegeben bzw. in diesen eingemischt wird, sollte es vorzugsweise einer zusätzlichen Behandlung unterzogen werden. Die Behandlung ist so vorzunehmen, dass eine allmähliche Abgabe des Zusatzstoffes an den Emittenten möglich ist (Teilfixierung).

Das Abdeckmaterial sollte mit einer Schichtdicke von 8 cm auf den Emittenten aufgetragen werden.

Wenn die emissionsmindernde Wirkung des erfindungsgemäßen Abdeckmaterials auf den Emittenten nachlässt, kann der Zusatzstoff nachdosiert werden, indem man ihn möglichst gleichmäßig auf die Oberfläche aufgibt.

Die Erfindung wird in den folgenden Beispielen und an Hand der Tabelle näher erläutert.

### Ausführungsbeispiel 1

Zu 100 Volumenprozent Perlit werden 20 Volumenprozent Milchsäure gegeben. Nach einem Tag wird das Material auf 120°C erwärmt und mit einer Silicanemulsion hydrophobiert.

### Ausführungsbeispiel 2

Zu 100 Volumenprozent Blähton werden 20 Volumenprozent Milchsäure gegeben. Nach einem Tag wird das Material auf 120°C erwärmt und mit einer Silicanemulsion hydrophobiert.

### Ausführungsbeispiel 3

Zu 100 Volumenprozent Häckselstroh werden 20 Volumenprozent Milchsäure gegeben. Nach einem Tag wird das Material mit einer Silicanemulsion hydrophobiert.

Eine Schweinegülle wurde zu Beginn der Lagerung jeweils mit einer 6 cm starken Abdeckschicht aus dem beschriebenen Material versehen bzw. zum Vergleich dazu ohne Abdeckung gelagert. Nach einer Lagerdauer von 10, 40 und 80 Tagen wurden die in der Tabelle angegebenen pH-Werte unterhalb der Abdeckschicht, nahe der Gülleoberfläche und etwa 30 cm unter der Gülleoberfläche, am Boden des Lagerbehälters gemessen.

**Tabelle:**

| Gülleabdeckung | pH-Wert der Gülle unterhalb der Abdeckung gemessen nach | | | pH-Wert der Gülle am Boden des Lagerbehälters gemessen nach | | |
|---|---|---|---|---|---|---|
| | 10 Tagen | 40 Tagen | 80 Tagen | 10 Tagen | 40 Tagen | 80 Tagen |
| keine | 6,6 | 7,2 | 7,6 | 6,5 | 7,1 | 7,5 |
| 6 cm Perlit mit 20 Volumenprozent Milchsäure | 5,7 | 5,4 | 5,4 | 6,0 | 5,8 | 5,6 |
| 6 cm Blähton mit 20 Volumenprozent Milchsäure | 4,8 | 6,1 | 6,0 | 5,3 | 6,2 | 6,0 |

## Patentansprüche

1. Abdeckmaterial für flüssige Substanzen und Haufwerke bestehend aus inertem Trägermaterial, das mit aktiven und hydrophobierenden Zusätzen kombiniert ist,
**dadurch gekennzeichnet, dass**
das inerte Trägermaterial pH-Wert-senkende Stoffe oder Stoffgemische enthält.

2. Abdeckmaterial nach Anspruch 1,
**dadurch gekennzeichnet, dass**
Säuren und Salze enthalten sind.

3. Abdeckmaterial nach Anspruch 1 oder 2,
**dadurch gekennzeichnet, dass**
anorganische und organische Säuren und Salze enthalten sind.

4. Abdeckmaterial nach einem der Ansprüche 1 bis 3,
**dadurch gekennzeichnet, dass**
Milchsäure und deren Salze enthalten sind.

5. Abdeckmaterial nach einem der Ansprüche 1 bis 4,
**dadurch gekennzeichnet, dass**
durch Mikroorganismen oder Enzyme umsetzbare Stoffe enthalten sind.

6. Abdeckmaterial nach einem der Ansprüche 1 bis 5,
**dadurch gekennzeichnet, dass**
kohlenhydrathaltige Stoffe enthalten sind.

7. Abdeckmaterial nach einem der Ansprüche 1 bis 6,
**dadurch gekennzeichnet, dass**
zuckerhaltige und/oder kohlenhydrathaltige organische Reststoffe enthalten sind.

8. Abdeckmaterial nach einem der Ansprüche 1 bis 7,
**dadurch gekennzeichnet, dass**
Glukose, Saccharose, Melasse enthalten sind.

9. Abdeckmaterial nach einem der Ansprüche 1 bis 8,
**dadurch gekennzeichnet, dass**
die aktive Zusätze enthaltenden Trägermaterialien mit Folien kombiniert sind, die überwiegend nur für Wasserstoff-Ionen durchlässig sind.

10. Verfahren zur Herstellung von Abdeckmaterial gemäß Anspruch 1,
**dadurch gekennzeichnet, dass**
das inerte Trägermaterial mit aktiven. Zusätzen vermischt und anschließend einer Hydrophobierungsbehandlung unterzogen wird.

11. Verfahren zur Herstellung von Abdeckmaterial nach Anspruch 10,
**dadurch gekennzeichnet, dass**
auf der Oberfläche des inerten Trägermaterials die aktiven Zusätze fixiert werden.

12. Verfahren zur Herstellung von Abdeckmaterial nach einem der Ansprüche 10 oder 11,
**dadurch gekennzeichnet, dass**
das inerte Trägermaterial vor der Vermischung und/oder Fixierung mit aktiven Zusätzen erwärmt wird.

13. Verfahren zur Herstellung von Abdeckmaterial,
nach einem der Ansprüche 10 bis 12,
**dadurch gekennzeichnet, dass**
das inerte Trägermaterial vor dem Einbringen aktiver Zusätze auf eine Temperatur zwischen 100 und 700°C erwärmt wird.

14. Verfahren zur Herstellung von Abdeckmaterial nach einem der Ansprüche 10 bis 13,
**dadurch gekennzeichnet, dass**
das als Hydrophobierungsmittel Stearate, Silicanemulsionen oder andere hydrophobierende Stoffe eingesetzt werden.

15. Verfahren zur Herstellung von Abdeckmaterial nach einem der Ansprüche 10 bis 14,
**dadurch gekennzeichnet, dass**
zwischen dem Abdeckmaterial und Emittenten eine Folie eingelegt wird, die überwiegend nur für Wasserstoff-Ionen durchlässig ist.

## Claims

1. Covering material for liquid substances and product heaps consisting of inert carrier material that is combined with active and hydrophobising additives,
wherein
the inert carrier material contains pH-value-reducing substances or substance mixtures.

2. Covering material according to Claim 1,
wherein
acids and salts are contained.

3. Covering material according to Claim 1 or 2,
wherein
inorganic and organic acids and salts are contained.

4. Covering material according to one of the Claims 1 to 3,
wherein
lactic acid and its salts are contained.

5. Covering material according to one of the Claims 1 to 4,
wherein
convertible substances are contained through micro organisms or enzymes.

6. Covering material according to one of the Claims 1 to 5,
wherein
substances having carbohydrates are contained.

7. Covering material according to one of the Claims 1 to 6,
wherein
organic residual substances having sugar and/or carbohydrates are contained.

8. Covering material according to one of the Claims 1 to 7,
wherein
glucose, saccharose, molasses are contained.

9. Covering material according to one of the Claims 1 to 8,
wherein
the carrier materials containing the active substances are combined with foils which are predominantly permeable for hydrogen-ions only.

10. Method for the production of covering material according to Claim 1,
wherein
the inert carrier material is mixed with active additives and, following this, is subjected to a hydrophobising treatment.

11. Method for the production of covering material according to Claim 10,
wherein
the active additives are fixed on the surface of the inert carrier material.

12. Method for the production of covering material according to one of the Claims 10 or 11,
wherein
the inert carrier material is heated before mixing and/or fixation with active additives.

13. Method for the production of covering material according to one of the Claims 10 to 12,
wherein
the inert carrier material is heated to a temperature between 100 and 700°C before the input of active additives.

14. Method for the production of covering material according to one of the Claims 10 to 13,
wherein
stearates, silicane emulsions or other hydrophobic substances are applied as hydrophobising agents.

15. Method for the production of covering material according to one of the Claims 10 to 14,
wherein,
between the covering material and emittent, a foil is placed which is predominantly permeable for hydrogen-ions only.

## Revendications

1. Matériau de couverture pour substances fluides et déblais se composant d'un matériau support inerte qui est combiné avec des adjuvants actifs et hydrophobisants,
**caractérisé en ce que**
le matériau support inerte contient des substances ou des compositions diminuant la valeur du pH.

2. Matériau de couverture selon la revendication 1,
**caractérisé en ce que**
des acides et des sels sont contenus.

3. Matériau de couverture selon la revendication 1 ou 2,
**caractérisé en ce que**
des acides et des sels anorganiques et organiques sont contenus.

4. Matériau de couverture selon l'une des revendications 1 à 3,
**caractérisé en ce que**
des acides lactiques et leurs sels sont contenus.

5. Matériau de couverture selon l'une des revendications 1 à 4,
**caractérisé en ce que**
des substances transformables par des microorganismes ou des enzymes sont contenues.

6. Matériau de couverture selon l'une des revendications 1 à 5,
**caractérisé en ce que**
des substances contenant des glucides sont contenues.

7. Matériau de couverture selon l'une des revendications 1 à 6,
**caractérisé en ce que**
des déchets organiques contenant du sucre et/ou contenant des glucides sont contenus.

8. Matériau de couverture selon l'une des revendications 1 à 7,
**caractérisé en ce que**
du glucose, du saccharose et de la mélasse sont contenus.

9. Matériau de couverture selon l'une des revendications 1 à 8,
**caractérisé en ce que**
les matériaux supports contenant des adjuvants actifs sont combinés avec des feuilles qui ne sont perméables principalement que pour les ions hydrogène.

10. Procédé pour la fabrication de matériau de couverture selon la revendication 1,
**caractérisé en ce que**
le matériau support inerte est mélangé avec des adjuvants actifs et soumis ensuite à un traitement hydrophobisant.

11. Procédé pour la fabrication de matériau de couverture selon la revendication 10,
**caractérisé en ce que**
les adjuvants actifs sont fixés à la surface du matériau support inerte.

12. Procédé pour la fabrication de matériau de couverture selon l'une des revendications 10 ou 11,
**caractérisé en ce que**
le matériau support inerte est chauffé avant le mélange et/ou la fixation avec des adjuvants actifs.

13. Procédé pour la fabrication de matériau de couverture
selon l'une des revendications 10 à 12,
**caractérisé en ce que**
le matériau support inerte est chauffé à une température entre 100 et 700°C avant l'apport d'adjuvants actifs.

14. Procédé pour la fabrication de matériau de couverture selon l'une des revendications 10 à 13,
**caractérisé en ce que**
des stéarates, des émulsions de silican ou d'autres substances hydrophobisantes sont employés comme agent hydrophobisant.

15. Procédé pour la fabrication de matériau de couverture selon l'une des revendications 10 à 14,
**caractérisé en ce que**
une feuille qui n'est perméable principalement que pour les ions hydrogène est insérée entre le matériau support et les sources émettrices.
